Europäisches Patentamt

European Patent Office

Office européen des brevets

(19)

(11) Publication number: **0 040 007**
**B1**

(12) **EUROPEAN PATENT SPECIFICATION**

(45) Date of publication of patent specification: **18.05.83**

(21) Application number: **81301735.7**

(22) Date of filing: **21.04.81**

(51) Int. Cl.³: **A 01 N 47/38** //(A01N47/38, 43/64)

(54) Fungicidal compositions.

(30) Priority: **24.04.80 GB 8013587**
**17.06.80 GB 8019738**

(43) Date of publication of application:
**18.11.81 Bulletin 81/46**

(45) Publication of the grant of the patent:
**18.05.83 Bulletin 83/20**

(84) Designated Contracting States:
**AT BE CH DE FR GB LI NL SE**

(56) References cited:
**FR - A - 2 384 762**
**GB - A - 1 576 277**

(73) Proprietor: **FBC LIMITED**
**Hauxton**
**Cambridge CB2 5HU (GB)**

(72) Inventor: **Birchmore, Richard John**
**118 Papplewick Lane**
**Hucknall Nottingham (GB)**

(74) Representative: **Waldman, Ralph David**
**Industrial Property Department FBC Limited**
**Chesterford Park Research Station**
**Saffron Walden, Essex CB10 1XL (GB)**

Courier Press, Leamington Spa, England.

## Fungicidal compositions

This invention relates to compositions with useful fungicidal properties.

Prochloraz is a known fungicide and is the approved common name for 1-[N-propyl-N-2-(2,4,6-trichlorophenoxy)ethylcarbamoyl]imidazole. Salts and complexes of this compound with metal salts are also known to have fungicidal activity.

We have now discovered that mixtures of prochloraz its salts and complexes with metal salts with certain triazole fungicides leads to an improvement in fungicidal activity.

Fungicidal compositions according to the present invention comprise prochloraz, its salts or complexes with metal salts and a triazole fungicide. Suitable triazole fungicides include triadimefon, proconazole (Code No. CGA 64250) and diclobutrazol. Other suitable triazoles include triadimenol. The triazole fungicides can also usually form salts and complexes with metal salts and these are included in the scope of the invention.

Triadimefon is the approved common name for 1-(4-chlorophenoxy)-3,3-dimethyl-1-(1H-1,2,4-triazole-1-yl)-2-butanone. It is a commercially available fungicide which is described in British Patent Specification 1,364,619. Proconazole is 1-[2-(2,4-dichlorophenyl)-4-propyl-1,3-dioxolan-2-yl methyl]-1,2,4-triazole (British Patent Specification 1,522,657), dichlobutrazol is 1-(2,4-dichlorophenyl)-4,4-dimethyl-2-(1,2,4-triazol-1-yl)pentan-3-ol (Belgian Patent 857,836) and triadimenol is 1-(4-chloro-phenoxy)-3,3-dimethyl-1-(1,2,4-triazol-1-yl)butan-2-ol (British Patent Specification 1,418,430). The fungicidal properties of these last three compounds were described in the proceedings of the 1979 British Crop Protection Conference at pages 565, 508 and 477 respectively and in the above identified patent specifications.

The ratios of the prochloraz or its derivatives to the triazole fungicides may vary over a wide range but are usually in the ratios 400:1 to 1:400, preferably 10:1 to 1:10, especially 5:1 to 1:5 and particularly from 4:1 to 1:4. These ratios are based on the weights of the free bases.

In addition other pesticides may be employed in conjunction with the active ingredients described above providing they do not adversely affect the interaction between the fungicidal components. For example it is sometimes useful to include additional fungicides which extend the range of activity in order to control a wider spectrum of fungi.

The compositions of the invention are especially useful for the control of powdery mildew (*Erysiphe graminis*) on cereal crops such as wheat, barley, oats and rye and other foliar diseases such as glume blotch (*Septorai nodorum*), leaf blotch (*Rhynchosporium secalis*), eyespot (*Pseudocerosporella herpotrichoides*) and ruse (e.g. *Puccinia graminis*). Certain compositions of the present invention can be used to control seed borne organisms such as bunt (Tilletia caries) on wheat, loose smut (*Ustilago nuda* and *Ustilago hordei*) on barley and oats, leaf spot (*Pyrenophora avenae*) on oats and leaf stripe (*Pyrenophora graminis*) on barley. The compositions can also be applied to rice for control of rice blast (*Pyricularia oryzae*), to horticultural crops such as apple trees for the control of apple scab (*Venturia inaequalis*), roses for the control of powdery mildew (*Sphaerotheca pannosa*) curcubits for the control of *Botrytis cinera* and turf for the control of dollar spot (*Sclerotinia homeocarpa*) and to stored produce for the control of storage rot organisms of citrus fruit, potatoes, sugar beet, apples, pears etc, (e.g. *Pencillium spp, Aspergillus spp, Botrytis cinerea*).

Metal complexes of prochloraz are described in our British Patent 1,567,521 and a particularly preferred complex is that formed with manganous chloride in which the molar ratio of prochloraz to manganese is 4:1.

The compositions of the present invention may be employed in many forms and are often most conveniently prepared in aqueous form immediately prior to use. One method of preparing such a composition is referred to as "tank mixing" in which the fungicidal ingredients in their commercially available form are mixed together by the farmer in a quantity of water for direct application.

In addition to tank mixing immediately prior to use the compositions containing prochloraz and the triazole fungicides may be formulated into a more concentrated primary composition which is diluted with water or other diluent before use to provide a preparation which can be applied to the crop by spraying. Such compositions may comprise a surface active agent in addition to the active ingredients and typical examples are a dispersion in an aqueous of non-aqueous vehicle, an emulsifiable concentrate, a dispersible powder or a dusting powder. As a concentrated primary composition the concentration of active ingredients can vary widely and can be for example from 5 to 95 per cent by weight of the composition. The primary composition is diluted to give compositions for application to a growing crop in which the amount of active ingredient applied to the crop is as specified below.

An emulsifiable concentrate, also known as a "miscible liquid", comprises a solution of the active ingredients in a non aqueous solvent in association with one or more emulsifying agents. An emulsion is formed when the emulsifiable concentrate is mixed with water.

A dispersible powder comprises the active ingredients in finely divided form in association with one or more dispersing agents so that a stable aqueous dispersion of the active ingredients is formed on mixing the powder with water. A finely divided inert solid diluent such as kaolin or diatomaceous earth sold under the Registered Trade Mark CELITE is generally incorporated in the dispersible powder.

A dusting powder comprises the active ingredients intimately mixed with a solid pulverant diluent, for example kaolin.

The concentration of the active ingredients (when used as the sole active components) in a composition for direct application to the crop by conventional ground methods is preferably within the range of 0.001 to 10 percent by weight of the composition, especially 0.005 to 5 per cent by weight, but more concentrated compositions containing up to 40 per cent may be desirable in the case of aerial sprays.

As a further aspect, the invention includes a method for controlling a phytopathogenic fungus which comprises applying to seeds, plants or their habitat a composition of the invention. The composition can be applied directly at the time of drilling so that the active composition controls the growth of fungi which attack the seed. A suitable application rate is within the range of from 0.025 to 10 kilogram per hectare, more preferably from 0.04 to 5.0 kilogram per hectare.

Alternatively the composition of the invention can be applied directly to the plant by, for example, spraying or dusting either at the time which the fungus has begun to appear on the plant or before the appearance of fungus, as a protective measure. In both cases the preferred mode of application is by foliar spray. It is generally important to obtain good control of fungi in the early stages of plant growth as this is the time when the plant can be most severely damaged. For cereal crops such as wheat, barley and oats it is often desirable to spray the plant at or before growth stage 6 (Feeke's scale), although additional treatments when the plant is more mature can augment resistance to the growth or spread of fungi. It may also sometimes be useful to treat the roots of a plant before or during planting, for example, by dipping the roots in a suitable liquid or solid composition. When the composition of the invention is applied directly to the plant a suitable rate of application is from 0.05 to 5 kilograms per hectare, preferably from 0.25 to 1.5 kilogram per hectare.

In a further method of the invention the composition of the invention can be applied to the seed in order to combat seed-borne diseases. This method is of particular use in the treatment of cereal grain against attack by, for example, leaf spot of oats, leaf stripe of barley, loose smut of barley, loose smut of oats, and bunt of wheat. If cereal grain is to be stored in a store-room or container it may be convenient to treat the store-room or container with a composition according to the invention instead of, or in addition to, treatment of the cereal grain itself. A suitable rate of application for a seed dressing is from 0.02 to 1.0 g per kilogram, such as for example from 0.05 to 0.25 g per kilogram.

A particular method of the invention is one for controlling foliar diseases on a cereal crop, such as for example wheat, barley, oats or rye which comprises applying a composition of the invention to the crop. Preferably the mode of application is by foliar spray of the growing crop.

The invention is illustrated in the following Examples which describe, *in vitro* experiments on mixtures of prochloraz and triazole fungicides in which a synergistic effect was observed.

Example 1

Aqueous suspensions prepared from prochloraz and a commercially available formulation containing triadimefon were prepared and were incorporated into molten malt extract agar in amounts to give the required concentration of active ingredient in the agar. The molten agar was then poured into 9 cm. Petri dishes and allowed to set. The agar in each dish was inoculated with a plug taken from an agar culture of *Botrytis cinerea* and the dishes were incubated at 20°C for three days. The colony diameters were then measured and the amount of growth expressed as a percentage of the growth observed with a control calculated. Each experiment was replicated four times and a mean value of the observed growth as a percentage of control is shown in Table I.

TABLE I

| Concentration of prochloraz (ppm) | Concentration of triadimefon (ppm) | Observed growth as percentage of control | Expected growth as percentage of control $(E_1)$ |
|---|---|---|---|
| 0.125 | 0 | 43 | |
| 0 | 50 | 29.4 | |
| 0 | 25 | 64 | |
| 0 | 12.5 | 83.4 | |
| 0.125 | 50 | 0 | 12.6 |
| 0.125 | 25 | 0 | 27.5 |
| 0.125 | 12.5 | 0 | 35.9 |

3

To indicate the existence of synergism between the active components the results were treated in the manner described by Colby S. R. (1967 Calculating Synergistic and Antagonistic Responses of Herbicide Combinations. Weeds *15*, 20—22). The calculated values of $E_1$ the expected growth as a percentage of control was calculated from the equation

$$E_1 = \frac{X_1 Y_1}{100}$$

wherein $X_1$ is the growth as a percentage of control with prochloraz at a given concentration when used alone and $Y_1$ is the growth as a percentage of control with triadimefon at a given concentration when used alone. If the observed growth is less than $E_1$ the results indicate synergism. In the Table above the results with the mixture do show evidence of synergism.

Example 2

Aqueous suspensions of prochloraz and technical grade triadimefon were prepared and used in agar plate experiments in a similar manner to that described in Example 1 except that a culture of *Alternaria solani* was used. The results obtained are shown below in Table II.

TABLE II

| Concentration of prochloraz (ppm) | Concentration of triadimefon (ppm) | Observed growth as percentage of control | Expected growth as percentage of control ($E_1$) |
|---|---|---|---|
| 0.125 | | 65 | |
| 0.25 | | 51 | |
| 0.5 | | 24 | |
| | 12.5 | 94 | |
| | 25 | 90 | |
| | 50 | 75 | |
| | 100 | 54 | |
| 0.125 | 12.5 | 36 | 61 |
| 0.125 | 25 | 31 | 58.5 |
| 0.125 | 50 | 25 | 48.75 |
| 0.125 | 100 | 20 | 35.1 |
| 0.25 | 12.5 | 31 | 47.9 |
| 0.25 | 25 | 24 | 45.9 |
| 0.25 | 50 | 26 | 38.3 |
| 0.25 | 100 | 23 | 27.5 |
| 0.5 | 12.5 | 21 | 22.6 |
| 0.5 | 25 | 15 | 21.6 |
| 0.5 | 50 | 13 | 18.0 |
| 0.5 | 100 | 12 | 13.0 |

Example 3

An experiment was performed in a similar manner to that described in Example 2 except that a culture of *Fusarium oxysporum fsp cucumerinum* was used. When triadimefon was used alone at a rate of 0.5 ppm there was no observed reduction in the growth of the organism whereas when this amount of triadimefon was combined with prochloraz at the rates set out in Table III the observed growth was less than that observed with prochloraz alone.

# 0 040 007

TABLE III

| Concentration of prochloraz (ppm) | Concentration of triadimefon (ppm) | Observed growth as percentage of control |
|---|---|---|
| 1 | 0 | 34 |
| 0.5 | 0 | 41 |
| 0.25 | 0 | 51 |
| 0.125 | 0 | 65 |
| 1 | 0.5 | 29 |
| 0.5 | 0.5 | 36 |
| 0.25 | 0.5 | 49 |
| 0.125 | 0.5 | 47 |

Example 4

Solutions of prochloraz and triadimefon in acetone were added to aliquot portions of a stock suspension of *Ustilago hordei* to give the desired concentrations of the fungicides. The solutions were shaken for 48 hours and then the solid material was separated by filtration and the amount of the organism which had grown was determined by weighing. Five replicates were performed and the mean weights of the organism after drying expressed as a percentage of control are shown in the following Table IV. The "expected weight" shown in the fourth column of the Table was calculated by the method of Colby outlined above.

TABLE IV

| Concentration of prochloraz (ppm) | Concentration of triadimefon (ppm) | Observed weight as percentage of control | Expected weight as percentage of control |
|---|---|---|---|
| 1.25 | 0 | 95.6 | |
| 2.50 | 0 | 78.9 | |
| 5.00 | 0 | 42.7 | |
| 0 | 7.5 | 74.6 | |
| 1.25 | 7.5 | 27.3 | 71.3 |
| 2.5 | 7.5 | 26.2 | 41.1 |
| 5.00 | 7.5 | 13.6 | 31.9 |

Example 5

Aliquot samples of a suspension of *Ustilago hordei* were shaken with acetone solutions of prochloraz and triadimefon in which the fungicides had the concentrations shown in Table V. At the end of 48 hours samples were removed and a determination of the number of cells present was made microscopically using a haemocytometer. The results in Table V show that mixtures containing 100 ppm of total fungicide reduced the number of cells to a lower level than 100 ppm of either fungicide when used alone.

TABLE V

| Concentration of prochloraz (ppm) | Concentration of triadimefon (ppm) | Number of cells observed as percentage of control |
|---|---|---|
| 100 | | 72.7 |
| | 100 | 75.6 |
| 75 | 25 | 68.7 |
| 50 | 50 | 58.5 |
| 25 | 75 | 53.7 |

Example 6

Example 1 was repeated replacing the triadimefon by diclobutrazol and using *Pyricularia oryzae* as the culture. Synergism was demonstrated as shown in Table VI.

5

# 0 040 007

## TABLE VI

| Concentration of prochloraz (ppm) | Concentration of diclobutrazol (ppm) | Observed growth as percentage of control | Expected growth as percentage of control ($E_1$) |
|---|---|---|---|
| 0.03 | 0 | 87 | |
| 0.06 | 0 | 81 | |
| 0 | 0.015 | 93 | |
| 0 | 0.03 | 96 | |
| 0 | 0.06 | 99 | |
| 0.03 | 0.015 | 80 | 81 |
| 0.03 | 0.03 | 79 | 84 |
| 0.03 | 0.06 | 67 | 86 |
| 0.06 | 0.015 | 72 | 75 |
| 0.06 | 0.03 | 64 | 78 |
| 0.06 | 0.06 | 52 | 80 |

Example 7

Example 2 was repeated, replacing the triadimefon by proconazole. Synergism was demonstrated as shown in Table VII.

## TABLE VII

| Concentration of prochloraz (ppm) | Concentration of proconozole (ppm) | Observed growth as percentage of control | Expected growth as percentage of control ($E_1$) |
|---|---|---|---|
| 0.12 | 0. | 91 | |
| 0 | 0.03 | 100 | |
| 0 | 0.06 | 100 | |
| 0 | 0.12 | 98 | |
| 0.12 | 0.03 | 84 | 91 |
| 0.12 | 0.06 | 84 | 91 |
| 0.12 | 0.12 | 79 | 89 |

## Claims

1. A fungicidal composition comprising prochloraz, its salts or complexes with metal salts and a triazole fungicide selected from triadimefon, proconazole, dichlobutrazol and triadimenol.

2. A fungicidal composition as claimed in claim 1 wherein the triazole fungicide is triadimefon or its salt or its complex with a metal salt.

3. A fungicidal composition as claimed in claim 1 wherein the triazole fungicide is proconazole or its salt or its complex with a metal salt.

## Patentansprüche

1. Fungizide Mischung, enthaltend Prochloraz, dessen Salze oder Komplexe mit Metallsalzen und ein Triazolfungizid, ausgewählt aus Triadimefon, Proconazol, Dichlobutrazol und Triadimenol.

2. Fungizide Mischung gemäß Anspruch 1, dadurch gekennzeichnet, daß das Triazolfungizid Triadimefon oder dessen Salz oder dessen Komplex mit einem Metallsalz ist.

3. Fungizide Mischung gamäß Anspruch 1, dadurch gekennzeichnet, daß das Triazolfungizid Proconazol oder dessen Salz oder dessen Komplex mit einem Metallsalz ist.

## Revendications

1. Composition fongicide comprenant du prochloraz, ses sels ou complexes avec des sels métalliques et un triazole fongicide choisi entre le triadiméfon, le proconazole, le diclobutrazol et le triadiménol.

6

2. Composition fongicide suivant la revendication 1, dans laquelle le triazole fongicide est le triadiméfon ou son sel ou son complexe avec un sel métallique.

3. Composition fongicide suivant la revendication 1, dans laquelle le triazole fongicide est le proconazole ou son sel ou son complexe avec un sel métallique.